# EUROPÄISCHE PATENTSCHRIFT

(11) **EP 3 772 266 B1**
(45) Veröffentlichungstag und Bekanntmachung des Hinweises auf die Patenterteilung: **27.09.2023**
(21) Anmeldenummer: 20189689.1
(22) Anmeldetag: 05.08.2020
(51) Int. Cl.: A01B 29/06, A01B 35/28, A01B 49/02, E01C 23/082, A01B 71/02, A01B 51/04, A01B 61/04, E01C 23/088, E01C 13/00

(54) **REITBAHNPLANER FÜR VERSCHIEDENE REITDISZIPLINEN**
RIDING TRACK PLANNER FOR A NUMBER OF RIDING DISCIPLINES
NIVELEUR DE MANÈGE POUR DIFFÉRENTES DISCIPLINES D'ÉQUITATION

(30) Priorität: 05.08.2019 DE 102019121136
(43) Veröffentlichungstag der Anmeldung: 10.02.2021
(73) Patentinhaber: Ruf, Markus, 72510 Stetten a.k.M. (DE)
(72) Erfinder: Ruf, Markus, 72510 Stetten a.k.M. (DE)
(74) Vertreter: Otten, Roth, Dobler & Partner mbB Patentanwälte

(56) Entgegenhaltungen:
- EP-A2- 0 150 080
- AT-B- 318 964
- DE-A1- 1 632 787
- DE-A1- 10 309 101
- DE-U1- 20 112 731
- DE-U1-202007 016 639
- US-A- 3 937 460

## Beschreibung

Die Erfindung betrifft einen Reitbahnplaner zum Ebnen von Reitbahnen und zum Präparieren unterschiedlicher Belagbeschaffenheiten von Reitbahnen verschiedener Reitdisziplinen.

Aus dem Stand der Technik ist beispielsweise aus der DE 20 2011 108 195 U1 ein Reitbahnplaner bekannt, der ein Gleitblech und eine Walze als Werkzeuge einsetzt, mit denen jeweils der Reitbahn-Boden hinsichtlich seiner Beschaffenheit präpariert werden kann, wobei diese Werkzeuge jeweils unabhängig voneinander höhenverstellbar sind und somit auch unabhängig voneinander in Eingriff mit dem Boden gebracht werden können. Ferner wird im Stand der Technik von der Firma LS-Lingemann-Systemgeräte, 57368 Lennestadt, Deutschland unter der Bezeichnung "floor-care DUPLEX" ein Reitbahnplaner vertrieben, der zwei Werkzeuge aufweist, die insgesamt in Fahrtrichtung um eine Drehachse um 180° verschwenkt werden können; beim Werkzeugwechsel wird entsprechend die gesamte Vorrichtung, die an einem Zugfahrzeug hängt, zunächst vom Boden abgehoben, um eine Achse in Fahrtrichtung gewendet und wieder Richtung Boden abgesenkt.

Weiter ist aus der AT 318 964 B eine Vorrichtung zum Verbinden eines Folgegerätes und eines vorgereihten Schlepperanbaugeräts bekannt, mit welchem Bodenbeläge mit zwei hintereinanderliegenden Werkzeugen bearbeitet werden können. Dabei kann je nach Schwenkung des Folgegerätes die jeweilige Arbeitstiefe der einzelnen Werkzeuge eingestellt werden.

Aufgabe der Erfindung ist es, einen Reitbahnplaner bereitstellen zu können, der für verschiedene Reitdisziplinen und somit auch unterschiedliche Beläge bzw. Belageigenschaften von Reitbahnen bzw. Reitbahnplätzen ausgelegt ist, aber dennoch eine möglichst einfache Handhabung erlaubt.

Die Aufgabe wird, ausgehend von einem Reitbahnplaner der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Der erfindungsgemäße Reitbahnplaner soll zum Pflegen eines Reitbodens und zum Präparieren von Reitbahnen eingesetzt werden. Eine Reitbahn, vor allem im Freien, ohne Überdachung, ist ständigen Witterungseinflüssen ausgesetzt und wird auch durch das Reiten, also das Auftreten mit den Hufen, ständig mechanisch bearbeitet und verändert. Um allerdings konstante, optimale Reitbedingungen zu erhalten, muss der Boden, der folglich je nach Situation, der er zuvor ausgesetzt war und die seine Bodenbeschaffenheit beeinflusst hat, entsprechend präpariert werden. Hinzu kommt auch, dass zum Beispiel für Trainingseinheiten beim Reiten in der Regel ein lockerer Bodenbelag gewünscht ist, anders als dies bei Turnieren bzw. Wettbewerben der Fall ist. Die Reitplätze werden demzufolge präpariert, indem der Boden je nach Bedarf gelockert, verdichtet, geglättet, gekrümelt oder gemischt wird. Typische Werkzeuge sind zum Beispiel zum Verdichten eine glatte Walze, die für Turniere den Boden ebnet und verdichtet. Bei Trainingseinheiten sind eher aufgelockerte Böden vorteilhaft, sodass beispielsweise eine Gitterwalze verwendet wird. Zum Glätten können auch sogenannte Gleitbleche eingesetzt werden, die als Blech mit gekrümmter Oberfläche ausgebildet sind; beim Präparieren wird dieses Blech über den Boden gezogen und ebnet die Fläche ein. Zum Auflockern von zum Beispiel nassen, verdichteten Böden können auch sogenannte Zinken eingesetzt werden, die wie drahtartige Gebilde geformt sind, ähnlich einer Egge, und mit denen der Boden "durchpflügt" werden kann. Zum Krümeln können Krümelwalzen eingesetzt werden.

Der erfindungsgemäße Reitbahnplaner umfasst wenigstens drei dieser Werkzeuge. Er weist zunächst einen Tragrahmen auf, der an ein Zugfahrzeug, insbesondere einen Traktor, einen Radlader oder ein sonstiges Fahrzeug mit passender Kupplung koppelbar ist und mit dem der Reitbahnplaner in Fahrtrichtung über den Platz gezogen werden kann. An dem Tragrahmen wiederum ist eine Werkzeughalterung angebracht, die zur Halterung und Positionierung vorgenannter Werkzeuge dient. Sie kann mit dem Tragrahmen verschmolzen sein, z.B. in Form einer am Tragrahmen angebrachten oder integrierten Öse, oder auch als Tragarm beweglich gelagert sein. Insbesondere kann ein Werkzeug, welches gerade nicht verwendet wird, so positioniert werden, dass es nicht mit dem Boden in Kontakt kommt, während ein gerade im Betrieb befindliches Werkzeug hinsichtlich seiner Höhe so positioniert wird, dass es mit dem Boden in Eingriff stehen kann bzw. diesen berührt. Die Werkzeuge, welche von der Werkzeughalterung gehalten werden, sind in ihrer Längsrichtung senkrecht zur Fahrtrichtung ausgerichtet, sodass der Reitbahnplaner im Betrieb eine präparierte Bahn einer gewissen Spurbreite hinterlässt.

Die Werkzeughalterung umfasst ferner ein Werkzeugmagazin zur Bevorratung der Werkzeuge, welches gegenüber den Tragrahmen drehbar gelagert ist. Die entsprechende Drehachse wiederum ist senkrecht zur Fahrtrichtung ausgerichtet. Insbesondere ist die Drehachse in Bezug auf den zu bearbeitenden Boden im Betrieb im Wesentlichen parallel ausgerichtet, sodass das Werkzeug über seine gesamte Spurbreite mehr oder weniger einheitlich mit dem Boden in Kontakt kommt. Die jeweiligen Werkzeuge können an der Werkzeughalterung bzw. am Werkzeugmagazin durch Schnellfanghaken angebracht und gesichert werden. Schnellfanghaken ermöglichen auch einen raschen Ausbau und Einbau von Werkzeugen bei Bedarf.

Durch die Option, das Werkzeugmagazin zu drehen, wird ein Werkzeugwechsel ermöglicht, der sich in vorteilhafter Weise dadurch auszeichnet, dass -im Gegensatz zum Stand der Technickein Umspannen und Austauschen der Werkzeuge (mit Ausbau des bisherigen und Einbau eines neuen Werkzeugs) am Tragrahmen mehr notwendig ist und somit auch ein sehr schneller Werkzeugwechsel je nach Bedarf ermöglicht wird. Die Handhabung kann also durch die Erfindung deutlich verbessert werden, zumal auch das Ausbauen und Einbauen von Werkzeugen bei herkömmlichen Reitbahnplanern nach dem bisherigen Stand der Technik gegebenenfalls auch die Hilfe mehrerer Personen erfordern kann. Kommt es zum Beispiel vor, dass ein Reitplatz etwa noch am gleichen Tag für zwei Reitveranstaltungen unterschiedlicher Art verwendet wird, so ist es notwendig, diesen entsprechend vor dem jeweiligen Anlass neu zu präparieren. Beispielsweise kann ein Reitplatz morgens noch als Trainingsparcours verwendet werden, während er am Nachmittag für ein Turnier zur Verfügung stehen muss. Dementsprechend ist am Vormittag eher ein lockerer Boden gewünscht, während für den Wettbewerb eine Verdichtung des Bodens notwendig ist, sodass das Einebnen des Bodens unterschiedlich zu erfolgen hat. Diese Bodenbeschaffenheiten werden durch Präparieren mit jeweils unterschiedlichen Werkzeugen erreicht.

Da die hierfür notwendigen Werkzeuge gemäß der Erfindung bereits am Tragrahmen am Werkzeugmagazin befestigt sind und durch Drehung des Magazins gewechselt werden können, müssen die entsprechenden Werkzeuge auch nicht ausgebaut und getauscht werden, was in der Regel sehr zeitaufwendig und mühsam ist.

Einen entscheidenden Handhabungsvorteil bietet der erfindungsgemäße Reitbahnplaner aufgrund seiner Flexibilität im Einsatz bei unterschiedlichen Reitdisziplinen, da nicht nur unterschiedliche Belag-Eigenschaften für Turnier- und Trainingssituationen gefordert sind, sondern auch für unterschiedliche Reitdisziplinen wie Dressur, Westernreiten usw. Zudem setzen sich die Reitböden, gerade für unterschiedliche Reitdisziplinen, auch unterschiedlich zusammen und weisen z.B. auch textile Bestandteile auf. Ein gezieltes Präparieren zweier unterschiedlicher Beläge mit unterschiedlicher Zusammensetzung ist also mit der Erfindung ohne Umspannen und ohne Werkzeugwechsel möglich.

Der Reitbahnplaner gemäß der Erfindung zeichnet sich aber auch dadurch aus, dass er wesentlich platzsparender eingesetzt werden kann, als dies bei herkömmlichen Reitbahnplanern aus dem Stand der Technik der Fall ist, bei denen verschiedene Werkzeuge in Fahrtrichtung hintereinander angeordnet sind und dann lediglich durch Anheben der nicht benötigten Werkzeuge so eingestellt werden, dass das gewünschte Werkzeug in Bodenkontakt gebracht wird, gemäß der Erfindung mehrerer Werkzeuge platzsparend am Magazin also im Bereich einer Kreisfläche angeordnet. Zudem erfolgt gemäß der Erfindung das Drehen um eine Drehachse, die senkrecht zur Fahrtrichtung ausgerichtet ist, und folglich erfordert der Werkzeugwechsel praktisch keinen zusätzlichen Raum. Gegebenenfalls ist es sogar möglich, die Drehung des Werkzeugmagazins während der Fahrt zu bewerkstelligen, sodass praktisch auch kein Zeitverlust entsteht, während bei herkömmlichen Reitbahnplanern allenfalls der gesamte Tragrahmen bzw. die Werkzeughalterung angehoben und um eine Drehachse in Fahrtrichtung gedreht werden muss. Dieser Vorgang ist wesentlich aufwendiger und langsamer, erfordert aber darüber hinaus auch wesentlich mehr Energie, um die schweren Werkzeuge sowie deren Halterung bzw. Tragrahmen insgesamt anzuheben, da ansonsten die Werkzeuge beim Wenden mit dem Boden kollidieren würden.

Der erfindungsgemäße Reitbahnplaner ist dadurch wesentlich flexibler und im Alltagsbetrieb besonders praktisch einsetzbar.

Erfindungsgemäß sind die Werkzeughalterung bzw. das Werkzeugmagazin so ausgebildet, dass durch Drehen des Werkzeugmagazins eines der Werkzeuge in einer Arbeitsposition gebracht wird, in der es mit der Reitbahn zum Ebnen bzw. Präparieren in Eingriff steht, während die übrigen Werkzeuge, die am Werkzeugmagazin bevorratet sind, in eine Ruheposition verschwenkt werden, in denen sie nicht (mehr) mit der Reitbahn in Eingriff stehen. Bei einer solchen Ausführungsform ist somit ein einfacher Werkzeugwechsel möglich.

Der Reitbahnplaner kann je nach Ausführungsform an einen Traktor, einen Radlader oder eine anderes Zugfahrzeug angekoppelt werden. Da derartige Land- bzw. Baumaschinen meist einen für Werkzeuge und andere, am Fahrzeug angebrachte Maschinen zur Verfügung stehenden Antrieb bereitstellen, und zwar in Form eines Nebenabtriebs bzw. einer Zapfwelle, kann z.B. eine Drehbewegung übertragen werden, mit der wiederum das Werkzeugmagazin bei Bedarf gedreht werden kann. In der Regel ist zu diesem Zweck am Reitbahnplaner ein Getriebe vorgesehen. Es ist auch denkbar, eine Hydraulikkupplung zu verwenden, um beispielsweise Hydraulikleitungen anzuschließen und so das Werkzeugmagazin drehen zu können. Auch ein Anheben von Teilen des Reitbahnplaners (über Hydraulikzylinder) ist möglich. Auf diese Weise können Kosten und Gewicht eingespart werden, da der Reitbahnplaner nicht über einen eigenen Antriebsmotor zum Drehen des Werkzeugmagazins verfügen muss.

Je nach Ausführungsvariante kann der Tragrahmen einen Drehpunkt aufweisen, um den das Werkzeugmagazin drehbar gelagert ist, wobei die Werkzeuge auf einer Kreisbahn um den Drehpunkt herum gedreht werden können. Die Drehachse kann dabei senkrecht zur Fahrtrichtung, sowie in der Regel.parallel zur Ebene des zu bearbeitenden Bodens ausgerichtet sein, wie es oben bereits dargestellt wurde.

Bei der Drehung des Werkzeugmagazins werden die Werkzeuge bei einer Weiterbildung der Erfindung auf einer Kreisbahn gedreht, sodass ermöglicht wird, vom Drehpunkt aus einen konstanten Abstand in radialer Richtung zu den Werkzeugen zu wählen. Demzufolge kann beim Wechsel des Bearbeitungswerkzeugs durch Drehen des Werkzeugmagazins der Drehpunkt gegenüber dem Boden auf konstanter Höhe bleiben. Der Tragrahmen bzw. das Werkzeugmagazin müssen gegebenenfalls nicht angehoben werden.

Die Werkzeuge sind erfindungsgemäß sternförmig um den Drehpunkt platziert. Es können vom Drehpunkt aus radial Arme ausgehen, welche jeweils ein Werkzeug haltern. In vorteilhafter Weise können dabei die Werkzeuge in gleichem Abstand zum Drehpunkt angeordnet werden. Besitzt ein Werkzeug zum Beispiel eine größere Bauhöhe als ein anderes Werkzeug, so ist es denkbar, dass das Werkzeugmagazin eine Möglichkeit umfasst, um die Werkzeuge in radialer Richtung zum Drehpunkt hin oder vom Drehpunkt weg zu verschieben, damit die Werkzeuge dennoch jeweils gleichmäßig auf dem Boden aufliegen. In vorteilhafter Weise können somit grundsätzlich am gleichen Werkzeugmagazin Werkzeuge unterschiedlicher Hersteller zum Einsatz kommen.

Um einen optimalen Bearbeitungseingriff mit dem Boden zu erreichen, kann der Tragrahmen wiederum einen Grundrahmen und einen Tragarm umfassen, wobei der Tragarm schwenkbar zum Grundrahmen gelagert werden kann. Das Werkzeugmagazin kann wiederum drehbar am Tragarm gehalten werden, sodass über eine Schwenkbewegung des Tragarms relativ zum Grundrahmen die Höhe zum Boden eingestellt werden kann. Der Tragarm kann bei einer Ausführungsvariante der Erfindung aber auch in Richtung Boden hängen. Um einen möglichst konstanten Anpressdruck der Werkzeuge auf den Boden und eine konstant gute Positionierung der Werkzeuge relativ zum Boden zu erreichen, kann der Tragarm so gegenüber dem Grundrahmen über ein elastisches Element, insbesondere eine Feder verspannt sein, sodass der Tragarm in Richtung des zu ebnenden bzw. zu präparierenden Bodens gezogen wird. Beispielsweise kann der Tragarm zum Grundrahmen angewinkelt ausgerichtet sein, wobei auf der Seite mit dem speziellen Winkel, also zum Boden hin, eine Feder zwischen Tragarm und Grundrahmen gespannt wird. Hierbei handelt es sich um eine einfache und kostengünstige Ausgestaltung, um einen konstanten Anpressdruck und eine konstante relative Positionierung der Werkzeuge zum Boden erreichen zu können. Durch ein elastisches Element, das eine Kopplung zwischen Tragarm und Grundrahmen herstellt, kann auch eine Dämpfungswirkung gegenüber Stößen hergestellt werden, die z.B. durch Bodenunebenheiten zustande kommen. Diese Stöße werden auf die Werkzeuge am Tragarm übertragen und können somit gedämpft bzw. abgefedert werden.

Grundsätzlich ist es aber auch denkbar, bei einer Variante der Erfindung am Grundrahmen wenigstens ein Sekundärwerkzeug anzubringen oder zu lagern. Hierfür kann es sich anbieten, eine zusätzliche Walze oder gegebenenfalls eine Reihe Zinken zu verwenden. Ferner kann der Grundrahmen im Allgemeinen auch über ein Rad verfügt, das den Tragrahmen bei der Fahrt am Boden abstützt. Die Sekundärwerkzeuge bzw. ein Sekundärwerkzeug und das Werkzeugmagazin können bei einer Variante der Erfindung in Fahrtrichtung hintereinander (geschaltet) angeordnet sein, sodass beispielsweise die Zinken zunächst einen verdichteten Boden auflockern, während die endgültige Bearbeitung über das ausgewählte Werkzeug am Werkzeugmagazin stattfindet. Entsprechend können auch, je nach Ausführungsbeispiel, Tragarm, Werkzeugmagazin bzw. Sekundärwerkzeug zusätzlich höhenverstellbar ausgebildet sein. Der Tragarm kann zum Beispiel zu diesem Zweck angehoben werden, indem er über das entsprechende Drehgelenk, das in dem Rahmen verbindet, nach oben verschwenkt wird. Denkbar ist auch, dass der Tragrahmen teleskopierbar ausgebildet ist. Sekundärwerkzeuge, die am Grundrahmen befestigt sind, können höhenverstellbar ausgebildet sein, beispielsweise durch einen Hydraulikzylinder angehoben und so aus dem Eingriff in den Boden gebracht werden. Diese Maßnahme ist beispielsweise dann von Vorteil, wenn eine serielle Bearbeitung mit verschiedenen oder sämtlichen, in Fahrtrichtung hintereinander angeordneten Werkzeugen nicht gewünscht ist, beispielsweise der Boden nicht mehr aufgelockert werden muss.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1:: einen Reitbahnplaner gemäß der Erfindung an einem Zugfahrzeug, sowie
- Fig. 2:: einen weiteren Reitbahnplaner gem. der Erfindung, der unter anderem einen Ballasttank verwendet.

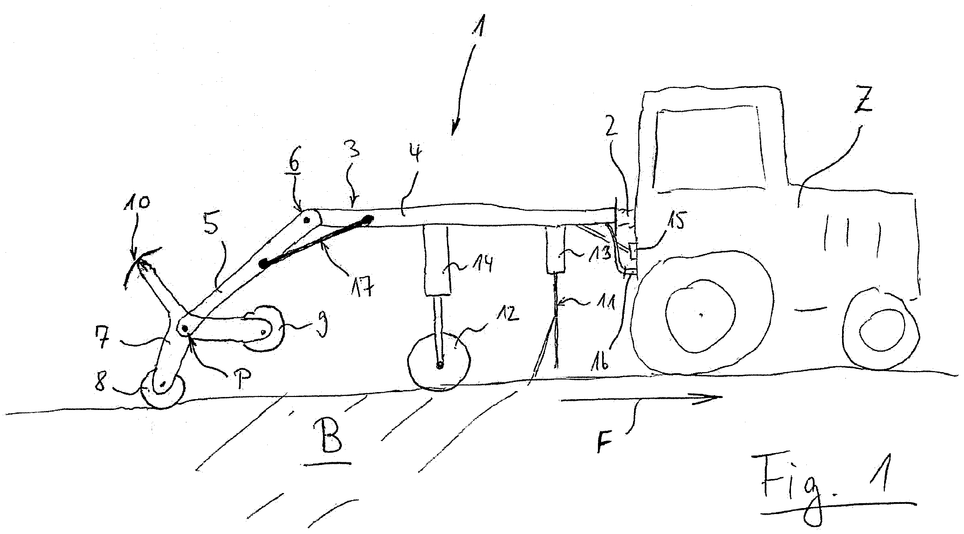

Figur 1 zeigt einen Reitbahnplaner 1, der an einem Zugfahrzeug Z über eine Kupplung 2 angekoppelt ist. Das Zugfahrzeug zieht im Betrieb den Reitbahnplaner 1 in der eingezeichneten Fahrtrichtung F. Der Reitbahnplaner 1 weist einen Tragrahmen 3 auf, der einen Grundrahmen 4 und einen Tragarm 5 umfasst. Beide, Grundrahmen 4 und Tragarm 5, sind über ein Gelenk 6 schwenkbar miteinander verbunden. Der Tragarm 5 stellt bei diesem Ausführungsbeispiel auch die Werkzeughalterung dar. Der Tragarm 5 umfasst auch das Werkzeugmagazin 7, welches drehbar auf einer Achse um den Drehpunkt P drehbar gelagert ist. Das Werkzeugmagazin 7 ist in Seitenansicht sternförmig ausgebildet und umfasst radiale Arme, an denen jeweils unterschiedliche Werkzeuge wie eine glatte Walze 8, eine Gitterwalze 9 und ein Gleitblech 10 angebracht sind. Durch Drehen des Werkzeugmagazins 7 um den Drehpunkt P können diese Werkzeuge 8, 9, 10 in Kontakt mit dem Boden B gelangen und somit den Boden präparieren. Die anderen Werkzeuge, hier in Fig. 1 die Werkzeuge 9, 10, sind durch die Winkelposition des Werkzeugmagazins oberhalb des Bodens B angeordnet und stehen nicht in dessen Eingriff, sind also passiv und werden nicht verwendet. Zum Halten der Winkelposition des Werkzeugmagazins 7 kann eine Rastvorrichtung vorgesehen sein, welche eine Drehbewegung des Werkzeugmagazins 7 blockiert. Diese kann insbesondere auch vom Zugfahrzeug aus betätigt und gelöst werden. Am Grundrahmen 4 sind zudem noch Zinken 11 und eine zusätzliche Walze 12 angeordnet, die jeweils über einen Zylinder 13, 14 höhenverstellbar (in Eingriff mit dem Boden oder passiv nicht in Eingriff mit dem Boden) positioniert werden können. Auch diese Sekundärwerkzeuge 11, 12 können somit vom Boden abgehoben werden und inaktiviert werden.

Ebenfalls schematisch dargestellt sind eine Ankopplung 15 an eine Zapfwelle des Zugfahrzeugs Z sowie eine Ankopplung 16 an eine Hydraulikleitung. Hiermit können die Zylinder 13, 14 bzw. der Drehantrieb des Werkzeugmagazins 7 betrieben werden. Die Steuerung der Antriebe ist vorteilhafterweise auch über das Zugfahrzeug Z und dessen Fahrer möglich.

Der Tragarm 5 ist über eine Feder 17 mit dem Grundrahmen 4 so verspannt, dass der Tragarm 5 in Richtung Boden B leicht gezogen wird und ein im Wesentlichen konstanter Anpressdruck des Werkzeugs 8 zum Boden B herrscht.

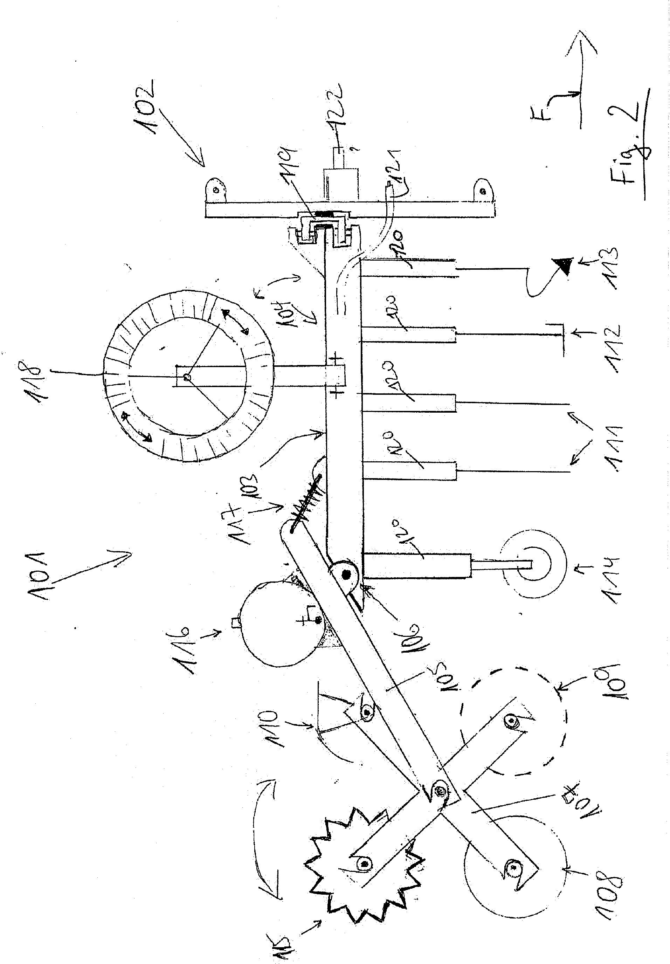

Ein ähnlicher Reitbahnplaner 101 ist in Figur 2 dargestellt, welcher eine Anbindung 102 an ein Zugfahrzeug aufweist. Auch bei dieser Variante besteht der Tragrahmen 103 aus einem Grundrahmen 104 und einem Tragarm 105 mit Wechselaufnahme, wobei der Tragarm 105 über ein Gelenk 106 mit dem Grundrahmen 104 schwenkbar verbunden ist. Das sternförmige Werkzeugmagazin 107 ist drehbar am Tragarm 105 gelagert und umfasst Wechselaufnahmen für die Werkzeuge, sodass es mit im Grunde beliebigen Werkzeugen 108, 109, 110, 115 frei kombiniert werden kann. In Fig. 2 umfasst die Werkzeugauswahl eine glatte Walze 108, eine Gitterwalze 109, ein Glätt- / Gleitblech 110 und eine Bodenlockerungswalze 115. Durch Drehen des Werkzeugmagazins 107 wird ausgewählt, welches Werkzeug 108, 109, 110, 115 für den Bearbeitungsvorgang herangezogen werden soll. Das Magazin 107 kann auch so gedreht werden, dass zwei Werkzeuge 109, 108 in Serie den Boden bearbeiten können und mit diesem in Kontakt stehen. Wie nachstehend erörtert wird, können auch noch weitere Werkzeuge, also Sekundärwerkzeuge 111, 112, 113 eingesetzt werden.

Um den Anpressdruck der Werkzeuge 108, 109, 110, 115 gegenüber dem Boden präzise einstellen zu können, ist am Tragarm 105 ein Ballasttank 116 vorgesehen, der je nach Bearbeitung gefüllt werden kann. Je voller der Ballasttank 116 gefüllt ist, desto stärker ist der Anpressdruck auf den Boden. Ferner wird der über das Gelenk 106 verschwenkbare Tragarm 105 (und somit das entsprechende Werkzeug, hier die Werkzeuge 108, 109) über eine Feder 117 wie ein Hebel gegen den Boden gedrückt wird. Gleichzeitig wirkt die Felder 117 als Dämpfer, um Stöße gegen die Werkzeuge 108, 109, 110 oder 115 bzw. das Werkzeugmagazin 107, die bei Unebenheiten im Boden auftreten und, abzufangen.

Am Grundrahmen 104 sind zusätzliche Sekundärwerkzeuge 111, 112, 113 befestigt, nämlich Zinken 111, ein Glättwinkel 112 und ein Tiefenlockerer 113. Außerdem ist am Grundrahmen 104 noch ein Transport- bzw. Stützrad 114 angebracht. Stützrad 114 und die Sekundärwerkzeuge 111, 112, 113 sind über Höhenverstellungen 120 am Grundrahmen 104 abgestützt, sodass nicht nur eine Höhenanpassung hinsichtlich des Untergrundes vorgenommen werden kann, sondern einzelne Sekundärwerkzeuge 111, 112, 113 auch so in ihrer Höhe verstellt werden können, dass sie den Boden nicht mehr berühren und nicht mehr bearbeiten.

Als Zusatzwerkzeug ist ebenfalls am Grundrahmen 104 ein Rand- / Hufschlagraumer 118 klappbar angebracht, der in Fig. 2 nach oben verschwenkt ist und in diesem Zustand keine Bearbeitung ausführt.

Die Anbindung 102 ans Zugfahrzeug erfolgt über ein Pendel- / Knickgelenk 119. Dargestellt sind auch eine Anschlussleitung für den Hydraulikanschluss 121 und die Ankopplung 122 an die Zapfwelle des Zugfahrzeugs.

Allen Ausführungsbeispielen und Weiterbildungen der Erfindung ist gemeinsam, dass der Reitbahnplaner gemäß der Erfindung ein Ebnen und/oder Präparieren von Bodenbelägen mit unterschiedlichen Eigenschaften und Zusammensetzungen ermöglicht, wobei ein Umspannen und Austauschen von Werkzeugen (mit Ausbau des bisherigen und Einbau eines neuen Werkzeugs) vermieden werden kann, während insgesamt der Reitbahnplaner wesentlich platzsparender ausgebildet ist und zusätzlich im Betrieb einen platzsparenden Werkzeugwechsel ermöglicht. Der erfindungsgemäße Reitbahnplaner kann daher die Bodenbeläge zum einen in unterschiedlicher Weise präparieren, er kann aber auch für unterschiedliche Reitdisziplinen ohne Aus- bzw. Einbau der passenden Werkzeuge verwendet werden. Er umfasst dazu eine Tragrahmen sowie eine Werkzeughalterung, wobei die Werkzeughalterung ein drehbar gelagertes Werkzeugmagazin umfasst, das so angeordnet ist, dass die Drehachse senkrecht zur Fahrtrichtung steht und somit auch die Längsausrichtung der Werkzeuge senkrecht zur Fahrtrichtung positioniert ist. Durch Drehung des Werkzeugmagazins wird ein Wechsel des Werkzeugs ermöglicht.

### Bezugszeichen:

- 1: Reitbahnplaner
- 2: Anbindung an das Zugfahrzeug
- 3: Tragrahmen
- 4: Grundrahmen
- 5: Tragarm
- 6: Gelenk
- 7: Werkzeugmagazin
- 8: Glatte Walze (Werkzeug)
- 9: Gitterwalze (Werkzeug)
- 10: Gleitblech (Werkzeug)
- 11: Zinken (Sekundärwerkzeug)
- 12: Walze (Sekundärwerkzeug)
- 13: Hydraulikzylinder
- 14: Hydraulikzylinder
- 15: Ankopplung an Zapfwelle
- 16: Hydraulikanschluss
- 17: Feder

- 101: Reitbahnplaner
- 102: Anbindung an das Zugfahrzeug
- 103: Tragrahmen
- 104: Grundrahmen
- 105: Tragarm mit Wechselaufnahme
- 106: Gelenk
- 107: Werkzeugmagazin mit Wechselaufnahme
- 108: Glatte Walze (Werkzeug)
- 109: Gitterwalze (Werkzeug)
- 110: Glätt-/Gleitblech (Werkzeug)
- 111: Zinken (Sekundärwerkzeug)
- 112: Glättwinkel (Sekundärwerkzeug)
- 113: Tiefenlockerer (Sekundärwerkzeug)
- 114: Transport- / Stützrad
- 115: Bodenlockerungswalze
- 116: Ballasttank
- 117: Feder / Dämpfer
- 118: Rand-/Hufschlagraumer (klappbar)
- 119: Pendel-/Knickgelenk
- 120: Höhenverstellung
- 121: Hydraulikanschluss
- 122: Zapfwellenanschluss

- B: Boden
- F: Fahrtrichtung
- P: Drehpunkt
- Z: Zugfahrzeug

## Patentansprüche

1. Reitbahnplaner (1, 101) zum Ebnen von Reitbahnen und Präparieren unterschiedlicher Belagbeschaffenheiten von Reitbahnen verschiedener Reitdisziplinen, umfassend:
- einen Tragrahmen (3, 103), der an ein Zugfahrzeug (Z), insbesondere einen Traktor und/oder Radlader ankoppelbar ist, um in einer Fahrtrichtung (F) gezogen zu werden,
- an dem eine Werkzeughalterung (5, 105) zur Halterung und Positionierung von wenigstens drei Werkzeugen (8, 9, 10, 108, 109, 110, 115) relativ zur zu ebnenden und/oder zu präparierenden Reitbahn (B) angebracht ist,
- wobei die Werkzeughalterung (5, 105) ein Werkzeugmagazin (7, 107) zur Bevorratung der Werkzeuge (8, 9, 10, 108, 109, 110, 115) aufweist, das gegenüber dem Tragrahmen um eine Drehachse senkrecht zur Fahrtrichtung (F) drehbar gelagert ist,
- wobei die Werkzeuge (8, 9, 10, 108, 109, 110, 115) am Werkzeugmagazin (7, 107) in ihrer Längsrichtung senkrecht zur Fahrtrichtung (F) ausgerichtet sind,
- sodass durch Drehung der Werkzeugmagazins (7, 107) ein Wechsel des für das Ebnen und/oder Präparieren vorgesehenen Werkzeugs (8, 9, 10, 108, 109, 110, 115) ermöglicht wird
- wobei die Werkzeughalterung (5, 105) und/oder das Werkzeugmagazin (7, 107) dazu ausgebildet ist/sind, durch Drehen des Werkzeugmagazins (7, 107) eines der Werkzeuge (8, 9, 10, 108, 109, 110, 115) in eine Arbeitsposition zu bringen, in der es mit der Reitbahn zum Ebnen und/oder Präparieren in Eingriff steht, während die übrigen Werkzeuge (8, 9, 10, 108, 109, 110, 115), die am Werkzeugmagazin (7, 107) bevorratet sind, in eine Ruheposition verschwenkt sind, in der sie nicht mit der Reitbahn in Eingriff stehen,
- wobei wenigstens eines der Werkzeuge (8, 9, 10, 108, 109, 110, 115) :
- als Gleitblech (10, 110) ausgebildet ist und/oder
- als glatte Walze (8, 108) ausgebildet ist und/oder
- als Gitterwalze (9, 109) ausgebildet ist und/oder
- als Zackenwalze und/oder als Krümelwalze ausgebildet ist und/oder
- als Bodenlockerungswalze (115) ausgebildet ist und/oder
- über wenigstens einen Schnellfanghaken am Werkzeugmagazin (7 107) und/oder an der Werkzeughalterung (5, 105) angebracht ist,
**dadurch gekennzeichnet, dass** die Werkzeuge (8, 9, 10, 108, 109, 110, 115) sternförmig um den Drehpunkt (P) angeordnet sind.

2. Reitbahnplaner (1, 101) nach einem der vorgenannten Ansprüche, **dadurch gekennzeichnet, dass** eine Kupplung (2, 102) zum Anbinden an ein Zugfahrzeug (Z), insbesondere einen Traktor und/oder Radlader, und/oder eine mechanische Kupplung (15, 122) zur Anbindung an eine Zapfwelle und zum Übertragen einer Drehbewegung, insbesondere zum Antreiben der Drehbewegung des Werkzeugmagazins (7, 107), und/oder eine Hydraulikkupplung (16, 121) zum Ankoppeln einer Hydraulikleitung zum Antrieb des Werkzeugmagazins (7, 107) und/oder zum Verstellen von Hydraulikzylindern und/oder zum Antreiben eines Hydraulikgetriebes vorhanden ist/sind.

3. Reitbahnplaner (1, 101) nach einem der vorgenannten Ansprüche, **dadurch gekennzeichnet, dass** am Tragrahmen (3, 103) ein Drehpunkt (P) ausgebildet ist, um den das Werkzeugmagazin (7, 107) drehbar am Tragrahmen (3, 103) gelagert ist, wobei die Werkzeuge (8, 9, 10, 108, 109, 110, 115) auf einer Kreisbahn um den Drehpunkt (P) gehaltert sind, wobei die Drehachse insbesondere senkrecht zur Fahrtrichtung (F) und/oder parallel zur Bodenebene der zu ebnenden und/oder zu präparierenden Reitbahn (B) ausgerichtet ist.

4. Reitbahnplaner (1, 101) nach einem der vorgenannten Ansprüche, **dadurch gekennzeichnet, dass** die Werkzeuge (8, 9, 10, 108, 109, 110, 115) in gleichem Abstand zum Drehpunkt (P) angeordnet sind.

5. Reitbahnplaner (1, 101) nach einem der vorgenannten Ansprüche, **dadurch gekennzeichnet, dass** der Tragrahmen (3, 103) einen Grundrahmen (4, 104) und einen Tragarm (5, 105) umfasst, wobei der Tragarm (5, 105) schwenkbar gegenüber Grundrahmen (4, 104) und das Werkzeugmagazin (7, 107) drehbar gegenüber am Tragarm (5, 105) gelagert ist.

6. Reitbahnplaner (1, 101) nachAnspruch 5, **dadurch gekennzeichnet, dass** der Tragarm (5, 105) so gegenüber dem Grundrahmen (4, 104) über ein elastisches Element (17, 117), insbesondere eine Feder verspannt ist, dass der Tragarm (5, 105) in Richtung des zu ebnenden und/oder zu präparierenden Bodens (B) gezogen wird und/oder dass Stöße auf den Tragarm (5, 105), insbesondere durch Bodenunebenheiten, durch das elastische Element (17, 117) gedämpft werden.

7. Reitbahnplaner (101) nach einem der vorgenannten Ansprüche, **dadurch gekennzeichnet, dass** ein Ballasttank (116) am Tragarm (105) angebracht ist, um einen Anpressdruck über die am Tragarm befestigten Werkzeuge (108, 109, 110) auf den Boden auszuüben.

8. Reitbahnplaner (1, 101) nach einem der vorgenannten Ansprüche, **dadurch gekennzeichnet, dass** am Grundrahmen (4, 104) wenigstens ein Sekundärwerkzeug (11, 12, 111, 112, 113, 118) angebracht und/oder gelagert ist.

9. Reitbahnplaner (1, 101) nach einem der vorgenannten Ansprüche, **dadurch gekennzeichnet, dass** der Tragarm (5, 105) und/oder das Werkzeugmagazin (7, 107) und/oder das wenigstens eine Sekundärwerkzeug (11, 12, 111, 112, 113, 118) gegenüber dem zu ebnenden und/oder zu präparierenden Boden (B) höhenverstellbar ausgebildet ist/sind.

## Claims

1. Equestrian track smoother (1, 101) for levelling off equestrian tracks and preparing different surface conditions for equestrian tracks for various equestrian disciplines, comprising:
- a support frame (3, 103), which can be coupled to a towing vehicle (Z), in particular a tractor and/or wheeled loader, in order to be towed in a direction of travel (F),
- to which a tool holder (5, 105) for holding and positioning at least three tools (8, 9, 10, 108, 109, 110, 115) relative to the equestrian track (B) that is to be levelled off and/or prepared is attached,
- wherein the tool holder (5, 105) has a tool magazine (7, 107), which is intended for storing the tools (8, 9, 10, 108, 109, 110, 115) and is mounted rotatably with respect to the support frame about an axis of rotation perpendicular to the direction of travel (F),
- wherein the tools (8, 9, 10, 108, 109, 110, 115) are aligned on the tool magazine (7, 107) with their longitudinal direction perpendicular to the direction of travel (F),
- with the result that rotation of the tool magazine (7, 107) makes it possible for the tool (8, 9, 10, 108, 109, 110, 115) provided for the levelling off and/or preparing operation to be changed,
- wherein the tool holder (5, 105) and/or the tool magazine (7, 107) are/is designed to bring one of the tools (8, 9, 10, 108, 109, 110, 115) into a working position by rotating the tool magazine (7, 107), in which working position the tool is in engagement with the equestrian track for the levelling off and/or preparing operation, while the rest of the tools (8, 9, 10, 108, 109, 110, 115) stored on the tool magazine (7, 107) are pivoted into an inactive position in which they are not in engagement with the equestrian track,
- wherein at least one of the tools (8, 9, 10, 108, 109, 110, 115):
- is in the form of a slide plate (10, 110) and/or
- is in the form of a smooth roller (8, 108) and/or
- is in the form of a lattice roller (9, 109) and/or
- is in the form of a pinking roller and/or a crumbler roller and/or
- is in the form of a decompaction roller (115) and/or
- is attached to the tool magazine (7, 107) and/or to the tool holder (5, 105) via at least one quick-catching hook,
**characterized in that** the tools (8, 9, 10, 108, 109, 110, 115) are placed in a star shape about the centre of rotation (P).

2. Equestrian track smoother (1, 101) according to one of the preceding claims, **characterized in that** a coupling (2, 102) for connection to a towing vehicle (Z), in particular a tractor and/or wheeled loader, and/or a mechanical coupling (15, 122) for connection to a power take-off and for transmitting a torque, in particular for driving the rotational movement of the tool magazine (7, 107), and/or a hydraulic coupling (16, 121) for coupling a hydraulic line for driving the tool magazine (7, 107) and/or for adjusting hydraulic cylinders and/or for driving a hydraulic transmission are/is present.

3. Equestrian track smoother (1, 101) according to either of the preceding claims, **characterized in that** a centre of rotation (P), about which the tool magazine (7, 107) is mounted rotatably on the support frame (3, 103), is formed on the support frame (3, 103), wherein the tools (8, 9, 10, 108, 109, 110, 115) are held on a circular track about the centre of rotation (P), wherein the axis of rotation is aligned in particular perpendicularly to the direction of travel (F) and/or parallel to the plane of the floor of the equestrian track (B) that is to be levelled off and/or prepared.

4. Equestrian track smoother (1, 101) according to one of the preceding claims, **characterized in that** the tools (8, 9, 10, 108, 109, 110, 115) are at the same distance from the centre of rotation (P).

5. Equestrian track smoother (1, 101) according to one of the preceding claims, **characterized in that** the support frame (3, 103) comprises a main frame (4, 104) and a support arm (5, 105), wherein the support arm (5, 105) is mounted pivotably with respect to the main frame (4, 104) and the tool magazine (7, 107) is rotatably mounted on the support arm (5, 105) with respect thereto.

6. Equestrian track smoother (1, 101) according to Claim 5, **characterized in that** the support arm (5, 105) is braced with respect to the main frame (4, 104) by an elastic element (17, 117), in particular a spring, such that the support arm (5, 105) is pulled in the direction of the floor (B) that is to be levelled off and/or prepared, and/or such that impacts against the support arm (5, 105), in particular owing to floor unevennesses, are damped by the elastic element (17, 117).

7. Equestrian track smoother (101) according to one of the preceding claims, **characterized in that** a ballast tank (116) is attached to the support arm (105), in order to exert a contact pressure on the floor via the tools (108, 109, 110) fastened to the support arm.

8. Equestrian track smoother (1, 101) according to one of the preceding claims, **characterized in that** at least one secondary tool (11, 12, 111, 112, 113, 118) is attached to and/or mounted on the main frame (4, 104).

9. Equestrian track smoother (1, 101) according to one of the preceding claims, **characterized in that** the support arm (5, 105) and/or the tool magazine (7, 107) and/or the at least one secondary tool (11, 12, 111, 112, 113, 118) have/has a height-adjustable design with respect to the floor (B) that is to be levelled off and/or prepared.

## Revendications

1. Niveleur (1, 101) de manège d'équitation pour niveler des manèges d'équitation et préparer différentes qualités de revêtement de manèges d'équitation pour différentes disciplines équestres, comprenant :
- un châssis porteur (3, 103) qui est apte à être attelé à un véhicule tracteur (Z), en particulier un tracteur et/ou un chargeur sur roues, pour être tracté dans une direction de déplacement (F),
- sur lequel est monté un support d'outils (5, 105) pour le maintien et le positionnement d'au moins trois outils (8, 9, 10, 108, 109, 110, 115) par rapport au manège d'équitation (B) à niveler et/ou à préparer,
- le support d'outils (5, 105) présentant un magasin d'outils (7, 107) pour le stockage des outils (8, 9, 10, 108, 109, 110, 115), qui est monté de manière rotative par rapport au châssis porteur autour d'un axe de rotation perpendiculaire à la direction de déplacement (F),
- les outils (8, 9, 10, 108, 109, 110, 115) étant orientés sur le magasin d'outils (7, 107) dans leur direction longitudinale de façon perpendiculaire à la direction de déplacement (F),
- de sorte que la rotation du magasin d'outils (7, 107) permet de changer l'outil (8, 9, 10, 108, 109, 110, 115) prévu pour le nivellement et/ou la préparation,
- le porte-outil (5, 105) et/ou le magasin d'outils (7, 107) étant conçu(s) pour amener l'un des outils (8, 9, 10, 108, 109, 110, 115) dans une position de travail en faisant tourner le magasin d'outils (7, 107), dans laquelle il est en prise avec le manège d'équitation pour le nivellement et/ou la préparation, tandis que les autres outils (8, 9, 10, 108, 109, 110, 115), qui sont stockés dans le magasin d'outils (7, 107), sont pivotés dans une position de repos dans laquelle ils ne sont pas en prise avec le manège d'équitation,
- au moins un des outils (8, 9, 10, 108, 109, 110, 115) :
- est conçu sous la forme d'une plaque de glissement (10, 110) et/ou
- est conçu sous la forme d'un rouleau lisse (8, 108) et/ou
- est conçu sous la forme d'un rouleau à grille (9, 109) et/ou
- est conçu sous la forme d'un rouleau à dents et/ou d'un rouleau émietteur et/ou
- est conçu sous la forme d'un rouleau d'ameublissement du sol (115) et/ou
- est monté sur le magasin d'outils (7, 107) et/ou sur le support d'outils (5, 105) par l'intermédiaire d'au moins un crochet à accrochage rapide,
**caractérisé en ce que** les outils (8, 9, 10, 108, 109, 110, 115) sont disposés en étoile autour du point de rotation (P).

2. Niveleur (1, 101) de manège d'équitation selon l'une des revendications précédentes, **caractérisé en ce qu'**est/sont présent(s) : un accouplement (2, 102) destiné à être relié à un véhicule tracteur (Z), en particulier un tracteur et/ou un chargeur sur roues, et/ou un accouplement mécanique (15, 122) destiné à être relié à une prise de force et à transmettre un mouvement de rotation, notamment pour entraîner le mouvement de rotation du magasin à outils (7, 107), et/ou un accouplement hydraulique (16, 121) pour raccorder une conduite hydraulique destinée à entraîner le magasin à outils (7, 107) et/ou à régler des vérins hydrauliques et/ou à entraîner une transmission hydraulique.

3. Niveleur (1, 101) de manège d'équitation selon l'une des revendications précédentes, **caractérisé en ce qu'**un point de rotation (P) est formé sur le châssis porteur (3, 103), autour duquel le magasin d'outils (7, 107) est monté de manière rotative sur le châssis porteur (3, 103), les outils (8, 9, 10, 108, 109, 110, 115) étant maintenus sur une trajectoire circulaire autour du point de rotation (P), l'axe de rotation étant notamment orienté perpendiculairement à la direction de déplacement (F) et/ou parallèlement au plan du sol du manège d'équitation (B) à niveler et/ou à préparer.

4. Niveleur (1, 101) de manège d'équitation selon l'une des revendications précédentes, **caractérisé en ce que** les outils (8, 9, 10, 108, 109, 110, 115) sont disposés à égale distance du point de rotation (P).

5. Niveleur (1, 101) de manège d'équitation selon l'une des revendications précédentes, **caractérisé en ce que** le châssis porteur (3, 103) comprend un châssis de base (4, 104) et un bras porteur (5, 105), le bras porteur (5, 105) étant monté pivotant par rapport au châssis de base (4, 104) et le magasin d'outils (7, 107) étant pivotant par rapport au bras porteur (5, 105).

6. Niveleur (1, 101) de manège d'équitation selon la revendication 5, **caractérisé en ce que** le bras de support (5, 105) est calé par rapport au châssis de base (4, 104) par l'intermédiaire d'un élément élastique (17, 117), en particulier un ressort, de telle sorte que le bras de support (5, 105) soit tiré en direction du sol (B) à niveler et/ou à préparer et/ou que les chocs sur le bras de support (5, 105), en particulier résultant des inégalités du sol, soient amortis par l'élément élastique (17, 117).

7. Niveleur de manège (101) selon l'une des revendications précédentes, **caractérisé en ce qu'**un réservoir de ballast (116) est monté sur le bras porteur (105) pour exercer une pression de contact sur le sol par l'intermédiaire des outils (108, 109, 110) fixés sur le bras porteur.

8. Niveleur (1, 101) de manège d'équitation selon l'une des revendications précédentes, **caractérisé en ce qu'**au moins un outil secondaire (11, 12, 111, 112, 113, 118) est monté et/ou logé sur le châssis de base (4, 104).

9. Niveleur (1, 101) de manège d'équitation selon l'une des revendications précédentes, **caractérisé en ce que** le bras de support (5, 105) et/ou le magasin d'outils (7, 107) et/ou ledit au moins un outil secondaire (11, 12, 111, 112, 113, 118) est/sont conçu(s) de façon à être réglable(s) en hauteur par rapport au sol (B) à niveler et/ou à préparer.
